# EUROPEAN PATENT APPLICATION

(11) **EP 4 704 027 A1**
(43) Date of publication of application: **04.03.2026**
(21) Application number: 24796187.3
(22) Date of filing: 25.04.2024
(51) Int. Cl.: G06T 7/00, G06T 7/70, G06T 17/00, G06T 3/00

(54) **BATTERY CELL INSPECTION METHOD AND APPARATUS, ELECTRONIC DEVICE, AND STORAGE MEDIUM**

(30) Priority: 28.04.2023 CN 202310492934
(71) Applicant: Wuxi Lead Intelligent Equipment Co., Ltd., Wuxi, Jiangsu 214028 (CN)
(72) Inventor: DING, Hui, Wuxi, Jiangsu 214028 (CN); MIAO, Feng, Wuxi, Jiangsu 214028 (CN); JIA, Shiyong, Wuxi, Jiangsu 214028 (CN)
(74) Representative: Rau, Schneck & Hübner Patentanwälte Rechtsanwälte PartGmbB
(86) International application number: PCT/CN2024/089869
(87) International publication number: WO 2024/222811

(57) **Abstract**

Embodiments of the present disclosure provide a cell inspection method and apparatus, an electronic device and a storage medium. The method includes: acquiring a plurality of cell projection images corresponding to a plurality of projection angles of a cell and including a region of interest of the cell; performing three-dimensional reconstruction on the region of interest of the cell according to the plurality of cell projection images and a projection angle corresponding to each of the cell projection images, to obtain a three-dimensional image corresponding to the region of interest of the cell; slicing the three-dimensional image in accordance with a preset direction to obtain a sliced image corresponding to the preset direction; and determining an inspection result of the cell according to the sliced image.

## Description

### CROSS-REFERENCE TO RELATED APPLICATIONS

The present disclosure claims priority to a Chinese patent application No. 202310492934.0 filed with the CNIPA on April 28, 2023 and entitled "CELL INSPECTION METHOD AND APPARATUS, ELECTRONIC DEVICE AND STORAGE MEDIUM", which is hereby incorporated by reference in its entirety.

### TECHNICAL FIELD

The present disclosure relates to the technical field of cell inspection, and particularly to a cell inspection method and apparatus, an electronic device and a storage medium.

### BACKGROUND

In the manufacturing of lithium battery cells, defect detection of the cells after hot pressing is an important aspect in the process quality inspection of the cells. Conventional inspection methods can inspect whether defects exist in the cells by photographing the cells without damaging them. The conventional photography method is based on imaging through projection, which is easily affected by interference such as the tabs of stacked cells, resulting in unclear images and inaccurate cell inspection results. In addition, in conventional industrial CT (Computed Tomography) systems, a full 360-degree scan of the cell is usually required to obtain complete data before performing three-dimensional reconstruction. This method involves collecting a large amount of data, and the three-dimensional reconstruction of the cell is also time-consuming, leading to low efficiency in cell inspection.

### SUMMARY

Embodiments of the present disclosure provide a cell inspection method, an apparatus, an electronic device and a storage medium, which may improve the accuracy and efficiency of cell inspection.

According to a first aspect of the present disclosure, a cell inspection method is provided, which includes:
acquiring a plurality of cell projection images corresponding to a plurality of projection angles of a cell and including a region of interest of the cell;
performing three-dimensional reconstruction on the region of interest of the cell according to the plurality of cell projection images and a projection angle corresponding to each of the cell projection images, to obtain a three-dimensional image corresponding to the region of interest of the cell;
slicing the three-dimensional image in accordance with a preset direction to obtain a sliced image corresponding to the preset direction; and
determining an inspection result of the cell according to the sliced image.

Optionally, the "performing three-dimensional reconstruction on the region of interest of the cell according to the plurality of cell projection images, to obtain a three-dimensional image corresponding to the region of interest of the cell" includes:
performing filtering processing on the plurality of cell projection images to obtain filtered images corresponding to the plurality of cell projection images respectively;
performing three-dimensional reconstruction on the region of interest of the cell according to the filtered images corresponding to the plurality of cell projection images respectively, to obtain the three-dimensional image corresponding to the region of interest of the cell.

Optionally, the cell is placed on a rotating platform with an imaging device arranged around the rotating platform, and the imaging device is configured for collecting the plurality of cell projection images; the "performing three-dimensional reconstruction on the region of interest of the cell according to the plurality of cell projection images and a projection angle corresponding to each of the cell projection images, to obtain a three-dimensional image corresponding to the region of interest of the cell" includes:
acquiring preset position information corresponding to the imaging device, and relative position information between the imaging device and the rotating platform; and
performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell.

Optionally, the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell" includes:
extracting an image feature of each of the cell projection images; and
performing three-dimensional reconstruction on the region of interest of the cell according to the image feature and the projection angle corresponding to each of the cell projection images, the preset position information and the relative position information, to obtain the three-dimensional image corresponding to the region of interest of the cell.

Optionally, the rotating platform drives the cell to rotate; before the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell", the method further includes:
acquiring a target rotation angle corresponding to each of the cell projection images, the target rotation angle representing an angle by which the rotating platform rotates when the imaging device collects the cell projection images; wherein the target rotation angle is within a preset rotation range; and
determining a projection angle corresponding to each of the cell projection images according to a target rotation angle corresponding to each of the cell projection images.

Optionally, the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell" includes:
determining target position information in three-dimensional space corresponding to the region of interest of the cell in each of the cell projection images according to a projection angle corresponding to each of the cell projection images;
determining a portion of three-dimensional pixels in the three-dimensional space corresponding to the region of interest of the cell according to the plurality of cell projection images and target position information corresponding to each of the cell projection images;
determining a tilt angle of the cell according to a target cell projection image and a target rotation angle corresponding to the target cell projection image; wherein the tilt angle represents an angle by which the cell tilts relative to a vertical direction, and the target cell projection image is any cell projection image whose corresponding target rotation angle is not a preset angle; and
performing local three-dimensional reconstruction on the region of interest of the cell according to the portion of three-dimensional pixels, the tilt angle of the cell, the preset position information and the relative position information, to obtain a three-dimensional image corresponding to the region of interest of the cell.

Optionally, the "determining a tilt angle of the cell according to a target cell projection image and a target rotation angle corresponding to the target cell projection image" includes:
identifying a projection area in the target cell projection image corresponding to a cell, and determining a projection tilt angle of the cell according to the projection area, the projection tilt angle of the cell representing an angle formed by projection of the tilt angle of the cell onto the target cell projection image; and
determining the tilt angle of the cell according to the projection tilt angle and the target rotation angle corresponding to the target cell projection image.

Optionally, the "determining an inspection result of the cell according to the sliced image" includes: inputting the sliced image into a trained artificial intelligence model, and identifying a pole piece area of the slice image through the artificial intelligence model to obtain a positive pole piece area and a negative pole piece area of the cell in the sliced image, the artificial intelligence model being obtained through training according to a sample image set including a plurality of sample images, each being divided to include a positive pole piece area and a negative pole piece area defined therein;
determining a pole piece alignment degree of the cell according to the positive pole piece area and the negative pole piece area of the cell; and
determining an inspection result of the cell according to the pole piece alignment degree.

Optionally, the preset direction includes a first preset direction and a second preset direction, the first preset direction corresponds to a length direction of the cell, and the second preset direction corresponds to a width direction of the cell; the "slicing the three-dimensional image in accordance with a preset direction to obtain a sliced image corresponding to the preset direction" includes:
slicing the three-dimensional image in accordance with the first preset direction to obtain a first sliced image corresponding to the first preset direction;
slicing the three-dimensional image in accordance with the second preset direction to obtain a second sliced image corresponding to the second preset direction;
the "determining a pole piece alignment degree of the cell according to the positive pole piece area and the negative pole piece area of the cell" includes:
determining a first pole piece alignment degree of the cell according to the positive pole piece area and the negative pole piece area of the cell in the first sliced image, the first pole piece alignment degree including a portion of a negative pole piece that extends beyond a positive pole piece in the length direction; and
determining a second pole piece alignment degree of the cell according to the positive pole piece area and the negative pole piece area of the cell in the second sliced image, the second pole piece alignment degree including a portion of the negative pole piece that extends beyond the positive pole piece in the width direction.

According to a second aspect of the present disclosure, a cell inspection apparatus is provided, which includes:
an image acquiring module configured for acquiring a plurality of cell projection images corresponding to a plurality of projection angles of a cell and including a region of interest of the cell;
an image reconstructing module configured for performing three-dimensional reconstruction on the region of interest of the cell according to the plurality of cell projection images and a projection angle corresponding to each of the cell projection images, to obtain a three-dimensional image corresponding to the region of interest of the cell;
an image slicing module configured for slicing the three-dimensional image in accordance with a preset direction to obtain a sliced image corresponding to the preset direction; and
an image inspecting module configured for determining an inspection result of the cell according to the sliced image.

According to a third aspect of the present disclosure, an electronic device is provided, which includes:
a memory storing executable program codes;
a processor coupled to the memory;
the processor calls the executable program codes stored in the memory to execute the method according to the first aspect of the embodiments of the present disclosure.

According to a fourth aspect of the present disclosure, a computer-readable storage medium is provided, the computer-readable storage medium stores a computer program, wherein the computer program, when executed by a processor, causes the processor to execute the method according to the first aspect of the embodiments of the present disclosure.

Through the cell inspection method, apparatus, electronic device and storage medium provided in the embodiments of the present disclosure, the electronic device can acquire a plurality of cell projection images, which correspond to a plurality of collection angles of the cell and include a region of interest of the cell. According to the plurality of cell projection images, the electronic device can perform three-dimensional reconstruction on the cell projection area to obtain a three-dimensional image corresponding to the region of interest of the cell, can also slice the three-dimensional image in accordance with a preset direction to obtain a sliced image corresponding to the preset direction, and then can determine the inspection result of the cell according to the sliced image. After performing three-dimensional reconstruction on the region of interest of the cell using the plurality of cell projection images, the obtained three-dimensional image provides more accurate and comprehensive cell information compared to the two-dimensional images obtained through projection, and slicing the three-dimensional image according to the preset direction also makes the sliced image more precise than the two-dimensional images obtained through projection, thereby improving the accuracy of cell inspection. Reconstructing only the region of interest of the cell instead of the entire cell reduces the time required for three-dimensional reconstruction and improves the efficiency of cell inspection.

### BRIEF DESCRIPTION OF THE DRAWINGS

To better illustrate technical solutions of embodiments of the present disclosure, the accompanying drawings required for the embodiments will be briefly introduced as follows. Note that the drawings described here are only some embodiments of the present disclosure. For those skilled in the art, additional drawings can be derived based on these disclosed drawings without creative efforts.
FIG. 1-A is a schematic diagram of a pole piece of a cell provided in an embodiment of the present disclosure;
FIG. 1-B is a schematic diagram of an application scenario of a cell inspection method provided in an embodiment of the present disclosure;
FIG. 2 is a schematic flowchart of a cell inspection method provided in an embodiment of the present disclosure;
FIG. 3 is a schematic diagram of an application scenario of pole piece alignment degree inspection of a cell provided in an embodiment of the present disclosure;
FIG. 4 is a schematic flowchart of another cell inspection method provided in an embodiment of the present disclosure;
FIG. 5 is a schematic diagram of a tilt angle of a cell provided in an embodiment of the present disclosure;
FIG. 6-A is a schematic diagram of a first sliced image provided in an embodiment of the present disclosure;
FIG. 6-B is a schematic diagram of a second sliced image provided in an embodiment of the present disclosure;
FIG. 7 is a modular diagram of a cell inspection apparatus provided in an embodiment of the present disclosure;
FIG. 8 is a structural block diagram of an electronic device provided in an embodiment of the present disclosure.

### DETAILED DESCRIPTION

Technical solutions in the embodiments of the present disclosure are described below with reference to the accompanying drawings in the embodiments of the present disclosure. Apparently, the described embodiments are merely some rather than all of the embodiments of the present disclosure. All other embodiments, acquired by those of ordinary skill in the art based on the embodiments of the present disclosure without any creative work, should fall into the protection scope of the present disclosure.

It is noted that the terms "comprising" and "having" and any variations thereof in embodiments of the present disclosure are intended to cover non-exclusive inclusion, e.g., a process, method, system, product, or apparatus comprising a series of steps or units need not be limited to those steps or units that are clearly listed, but may include other steps or units that are not clearly listed or inherent to those processes, methods, products, or apparatuses.

It will be appreciated that the terms "first", "second", etc., as used in the present disclosure, may be used herein to describe various elements, but these elements are not limited by these terms. These terms are used only to distinguish a first element from another element.

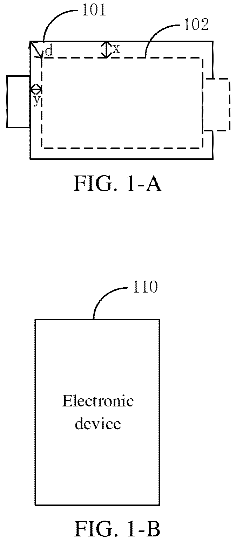

In related technologies, the inspection of pole piece alignment degree of a cell is typically performed by selecting a suitable projection angle to project a corner region of the cell, thereby obtaining a projection image corresponding to the corner region of the cell. An electronic device may determine, in the projection image, a distance from a corner point of a negative pole piece to a corner point of a positive pole piece, and consider that the distance from the corner point of the negative pole piece to the corner point of the positive pole piece can be used to characterize the pole piece alignment degree of the cell. However, the pole piece alignment degree of the cell may refer to portions where the negative pole piece extends beyond the positive pole piece in both length and width directions. As shown in FIG. 1-A, FIG. 1-A is a schematic diagram of a pole piece of a cell provided in an embodiment of the present disclosure, wherein the negative pole piece 101 and the positive pole piece 102 are superimposed, the distance from the corner point of the negative pole piece to the corner point of the positive pole piece is d, the portion where the width of the negative pole piece extends beyond the width of the positive pole piece is x, and the portion where the length of the negative pole piece extends beyond the length of the positive pole piece is y. According to the Pythagorean theorem, the square of the distance from the corner point of the negative pole piece to the corner point of the positive pole piece can be equal to the sum of the square of the portion where the length of the negative pole piece extends beyond the length of the positive pole piece and the square of the portion where the width of the negative pole piece extends beyond the width of the positive pole piece, i.e., x² + y² = d².

However, if the portion where the length of the negative pole piece extends beyond the length of the positive pole piece and the portion where the width of the negative pole piece extends beyond the width of the positive pole piece change simultaneously, the distance from the corner point of the negative pole piece to the corner point of the positive pole piece may remain unchanged. For example, if the portion where the length of the negative pole piece extends beyond the length of the positive pole piece increases while the portion where the width of the negative pole piece extends beyond the width of the positive pole piece decreases, the distance from the corner point of the negative pole piece to the corner point of the positive pole piece may remain unchanged. Therefore, inspecting the pole piece alignment degree of the cell through the distance from the corner point of the negative pole piece to the corner point of the positive pole piece is not accurate.

An embodiment of the present disclosure provides a cell inspection method, apparatus, electronic device, and storage medium, which can improve the accuracy and efficiency of cell inspection.

Below, a detailed description will be made with reference to the accompanying drawings.

As shown in FIG. 1-B, FIG. 1-B is a schematic diagram of an application scenario of a cell inspection method provided in an embodiment of the present disclosure. The application scenario may include an electronic device 110, which may include, but is not limited to, a mobile phone, tablet computer, wearable device, laptop, PC (Personal Computer), or the like.

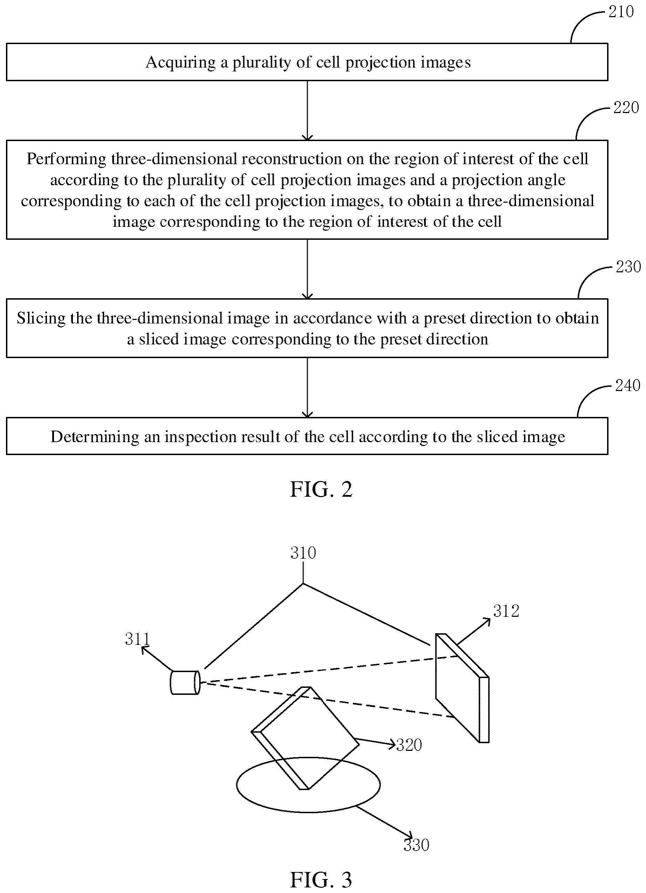

The electronic device 110 may acquire a plurality of cell projection images corresponding to a plurality of projection angles of a cell, and the cell projection images may include a region of interest of the cell. According to the plurality of cell projection images, the electronic device 110 may further perform three-dimensional reconstruction on the region of interest of the cell to obtain a three-dimensional image corresponding to the region of interest of the cell, slice the three-dimensional image in accordance with a preset direction to obtain a sliced image corresponding to the preset direction, and then determine an inspection result of the cell according to the sliced image. As shown in FIG. 2, FIG. 2 is a schematic flowchart of a cell inspection method provided in an embodiment of the present disclosure. The cell inspection method may be applied to the electronic device in the above embodiment and may include the following steps:
Step 210: acquiring a plurality of cell projection images.

The electronic device may acquire a plurality of cell projection images. Optionally, the electronic device may be an imaging device and may directly capture the plurality of cell projection images. The electronic device may be communicatively connected to the imaging device and receive the plurality of cell projection images sent by the imaging device. Herein, the imaging device may include a beam output apparatus and a beam detection apparatus. The cell projection image may be an image formed by the beam detection apparatus detecting a beam that has passed through the cell when the beam output apparatus outputs the beam at a projection angle. Optionally, the imaging device may be a CT device, which may perform X-ray scanning on the cell at different projection angles to obtain the plurality of cell projection images. The beam output apparatus may be an X-ray bulb tube, and the beam detection apparatus may be an X-ray detector.

The plurality of cell projection images may correspond to a plurality of projection angles. The present disclosure imposes no limitation on the projection angles. The plurality of cell projection images are images obtained by photographing the cell at different projection angles. Optionally, the plurality of cell projection images may be captured by different imaging devices, or by the same imaging device at different photographing angles. For example, one cell projection image may be obtained by projecting the cell from the front, i.e., the beam output apparatus outputs the beam toward the front of the cell, and another image may be obtained by projecting the cell from the side, i.e., the beam output apparatus outputs the beam toward the side of the cell. By acquiring the plurality of cell projection images, the electronic device can obtain more comprehensive and accurate cell information, avoiding information loss and errors caused by a single projection image.

Herein, the cell projection image includes a region of interest of the cell, and the region of interest of the cell can be used to acquire data required for cell inspection. Optionally, the electronic device may determine a position of the region of interest of the cell according to an inspection type of the cell inspection. For example, the inspection type of the cell inspection may be pole piece alignment degree inspection, the pole piece alignment degree of the cell may refer to portions where the negative pole piece extends beyond the positive pole piece in both length and width directions, and then it is possible to determine the corner region of the cell as the region of interest of the cell. For another example, the inspection type of the cell inspection is cell tab inspection, and then it is possible to determine a tab region of the cell as the region of interest of the cell. Optionally, the region of interest of the cell may further include, but is not limited to, a pole piece area of the cell, an entire area of the cell, or the like, which is not limited in the embodiments of the present disclosure.

As shown in FIG. 3, FIG. 3 is a schematic diagram of an application scenario of pole piece alignment degree inspection of a cell provided in an embodiment of the present disclosure. The application scenario may include an imaging device 310, a cell 320, and a rotating platform 330, wherein, the imaging device 310 may include a beam output apparatus 311 and a beam detection apparatus 312, the cell 320 is placed on the rotating platform 330 and may be placed at a center position of the rotating platform 330, so that the rotating platform 330 leads the cell 320 to spin. The imaging device 310 may remain stationary. A rotation angle of the rotating platform 330 may correspond to a projection angle at which the imaging device 310 collects a cell projection image. The cell 320 may have a cuboid shape. The beam output apparatus 311 outputs a beam, which may pass through a corner region of the cell 320. The beam detection apparatus 312 detects the beam that has passed through the corner region of the cell 320, thereby generating the cell projection image.

It should be noted that since the pole piece alignment degree of the cell 320 includes portions where the negative pole piece extends beyond the positive pole piece in both length and width directions, compared with other regions of the cell 320, the electronic device can determine not only the portion where the negative pole piece extends beyond the positive pole piece in the length direction but also the portion where the negative pole piece extends beyond the positive pole piece in the width direction according to the corner region of the cell 320, whereas the electronic device can determine only one of them according to other regions. In addition, compared with other regions of the cell 320, since the geometric shape of the corner region of the cell 320 is more definite and it is possible to collect the cell projection images from various projection angles, when the electronic device performs three-dimensional reconstruction on the corner region of the cell 320, the generated three-dimensional image has higher accuracy and the reconstruction efficiency is also higher.

Step 220: performing three-dimensional reconstruction on the region of interest of the cell according to the plurality of cell projection images and a projection angle corresponding to each of the cell projection images, to obtain a three-dimensional image corresponding to the region of interest of the cell.

The electronic device may perform three-dimensional reconstruction on the region of interest of the cell according to the plurality of cell projection images and a projection angle corresponding to each of the cell projection images, to obtain a three-dimensional image corresponding to the region of interest of the cell.

Optionally, the electronic device may perform three-dimensional reconstruction on the region of interest of the cell through a three-dimensional reconstruction algorithm, thereby improving the efficiency of the three-dimensional reconstruction. Optionally, the three-dimensional reconstruction algorithm may include a back-projection reconstruction algorithm. The electronic device may back-project each of the cell projection images into three-dimensional space according to the plurality of cell projection images and a projection angle corresponding to each of the cell projection images, to generate back-projection data corresponding to each of the cell projection images. Then, the electronic device may superimpose the back-projection data corresponding to each of the cell projection images to generate a voxel dataset corresponding to the region of interest of the cell. The voxel dataset includes a plurality of voxels, and the voxel is used to represent a small cube in three-dimensional space. Finally, the electronic device may perform operations such as volume rendering or cross-section rendering on the voxel dataset to obtain a three-dimensional image corresponding to the region of interest of the cell. Optionally, the electronic device may also perform three-dimensional reconstruction on the region of interest of the cell through other three-dimensional reconstruction algorithms, such as a filtered reconstruction algorithm. Embodiments of the present disclosure do not limit the three-dimensional reconstruction algorithm, and any type of three-dimensional reconstruction algorithm may be selected to perform three-dimensional reconstruction on the region of interest of the cell.

Taking the back-projection of a first cell projection image as an example, where the first cell projection image is any one of the plurality of cell projection images, the electronic device may perform interpolation and weighting on each projection pixel point in the first cell projection image to obtain three-dimensional coordinates corresponding to each projection pixel point, that is, the electronic device may obtain back-projection data corresponding to each of the cell projection images. The projection pixel point refers to a pixel point corresponding to the cell in the cell projection image. In other words, the electronic device may extend each projection pixel point inversely into three-dimensional space along the corresponding projection angle and then calculate the three-dimensional coordinates corresponding to each pixel point.

In one embodiment, before reconstructing the three-dimensional image corresponding to the region of interest of the cell, the electronic device may further acquire preset position information corresponding to the imaging device and relative position information between the imaging device and the rotating platform. Then, the electronic device may perform three-dimensional reconstruction on the region of interest of the cell according to the plurality of cell projection images, the projection angle corresponding to each of the cell projection images, the preset position information, and the relative position information, to obtain a three-dimensional image corresponding to the region of interest of the cell. Optionally, the electronic device may determine position information of the three-dimensional image in three-dimensional space according to the projection angle corresponding to each of the cell projection images, the preset position information corresponding to the imaging device, and the relative position information between the imaging device and the rotating platform, and then may generate a three-dimensional image corresponding to the region of interest of the cell according to the plurality of cell projection images and the position information of the three-dimensional image in three-dimensional space.

Herein, the imaging device and the rotating platform may be preset. The preset position information corresponding to the imaging device may include position information of a beam output device and position information of a beam detection device. Optionally, the preset position information of the imaging device may also include position information of the beam output device or position information of the beam detection device and the relative position information between the beam output device and the beam detection device. The relative position information between the imaging device and the rotating platform may include relative position information between the beam output device and the rotating platform and/or relative position information between the beam detection device and the rotating platform. Optionally, the cell may be placed at a center position of the rotating platform, and the relative position information between the imaging device and the rotating platform may be relative position information between the imaging device and the center position of the rotating platform.

When the preset position information includes the position information of the beam output device, the relative position information between the imaging device and the rotating platform may be relative position information between the position information of the beam output device and the rotating platform. The electronic device may determine the position information of the beam detection device according to the relative position information between the beam output device and the beam detection device and the position information of the beam output device, and determine the position information of the rotating platform according to the relative position information between the beam output device and the rotating platform and the position information of the beam output device. When the preset position information includes the position information of the beam detection device, the relative position information between the imaging device and the rotating platform may be relative position information between the position information of the beam detection device and the rotating platform. The electronic device may determine the position information of the beam output device according to the relative position information between the beam output device and the beam detection device and the position information of the beam detection device, and determine the position information of the rotating platform according to the relative position information between the beam detection device and the rotating platform and the position information of the beam detection device.

Step 230: slicing the three-dimensional image in accordance with a preset direction to obtain a sliced image corresponding to the preset direction.

Since the three-dimensional image can be used to display morphological information of an object in three spatial directions, for the application scenario of cell inspection, it is necessary to observe the internal structure of the cell from different directions. At this time, it is necessary to slice the three-dimensional image to obtain sliced images along different directions.

The electronic device may slice the three-dimensional image according to the preset direction to obtain a sliced image corresponding to the preset direction. The sliced image may refer to a two-dimensional image obtained by selecting a plane in the three-dimensional space and projecting the three-dimensional image onto the plane. Herein, the preset direction may include a plurality of directions. The electronic device may slice the three-dimensional image according to each preset direction to obtain a sliced image corresponding to each preset direction, that is, sliced images corresponding to the plurality of preset directions respectively may be obtained. Optionally, the electronic device may slice the three-dimensional image according to the preset direction at a target position in the region of interest of the cell. The target position may be preset or determined according to the inspection type of the cell inspection. For example, the inspection type of the cell inspection may be pole piece alignment degree inspection, and the target position may be a position where the positive pole piece and the negative pole piece of the cell are overlapped.

In one embodiment, the electronic device may further perform filtering processing on the plurality of cell projection images to obtain filtered images corresponding to the plurality of cell projection images respectively. Then, the electronic device may perform three-dimensional reconstruction on the region of interest of the cell according to the filtered images corresponding to the plurality of cell projection images respectively, to obtain a three-dimensional image corresponding to the region of interest of the cell. By implementing the present embodiment, noise in the cell projection images can be removed, thereby improving the accuracy of the three-dimensional reconstruction.

Step 240: determining an inspection result of the cell according to the sliced image.

The electronic device may perform image processing on the sliced image to obtain the inspection result of the cell. Optionally, the electronic device may use an image processing algorithm to perform feature extraction on the sliced image to obtain feature data of the sliced image, and then determine whether the cell meets a preset inspection condition according to the feature data of the sliced image, so as to determine the inspection result of the cell. Optionally, the inspection type of the cell inspection may be pole piece alignment degree inspection. The electronic device may obtain the length and width of the negative pole piece and the length and width of the positive pole piece of the cell according to the feature data of the sliced image. The electronic device may determine the first pole piece alignment degree of the cell according to the length of the negative pole piece and the length of the positive pole piece, and may also determine the second pole piece alignment degree of the cell according to the width of the negative pole piece and the width of the positive pole piece, so as to judge whether the first pole piece alignment degree and the second pole piece alignment degree respectively meet corresponding preset inspection conditions, thereby determining the inspection result of the cell. The inspection type of the cell inspection may further include, but is not limited to, battery pole piece defect inspection, battery structure damage inspection, battery pole piece impurity inspection, etc., which is not limited in the embodiments of the present disclosure. In addition, the electronic device may obtain corresponding inspection results according to the inspection type.

Optionally, before performing image processing on the sliced image, the electronic device may further perform preprocessing on the sliced image. The preprocessing may include, but is not limited to, filtering processing, enhancement processing, binarization processing, etc. Herein, the filtering processing may remove noise in the sliced image to smooth the image, the enhancement processing may improve the contrast and clarity of the sliced image, and the binarization processing may convert the sliced image into a black-and-white binary image to facilitate image processing.

Optionally, the electronic device may use an image processing algorithm to perform feature extraction on the sliced image to obtain feature data of the sliced image. The feature data may include, but is not limited to, the shape, size, density, etc. of the cell. For example, the electronic device may extract the contour of the cell in the sliced image through a morphological algorithm and calculate shape features such as the area, perimeter, and aspect ratio of the cell. The electronic device may also extract edge features of the cell in the sliced image through an edge detection algorithm to calculate the length, curvature, etc. of the cell. The electronic device may further calculate density features such as density changes inside the cell through a grayscale variation analysis algorithm. The embodiments of the present disclosure do not limit the image processing algorithm for the sliced image.

In the embodiments of the present disclosure, the electronic device can acquire a plurality of cell projection images, which correspond to a plurality of collection angles of the cell and include a region of interest of the cell. According to the plurality of cell projection images, the electronic device can perform three-dimensional reconstruction on the cell projection area to obtain a three-dimensional image corresponding to the region of interest of the cell, can also slice the three-dimensional image in accordance with a preset direction to obtain a sliced image corresponding to the preset direction, and then can determine the inspection result of the cell according to the sliced image. After performing three-dimensional reconstruction on the region of interest of the cell using the plurality of cell projection images, the obtained three-dimensional image provides more accurate and comprehensive cell information compared to the two-dimensional images obtained through projection, and then by slicing the three-dimensional image according to the preset direction, it is also possible to make the sliced image more precise than the two-dimensional images obtained through projection, such that the accuracy of cell inspection is improved without reconstructing the entire cell, but only the region of interest of the cell is reconstructed, which reduces the time required for three-dimensional reconstruction and improves the efficiency of cell inspection.

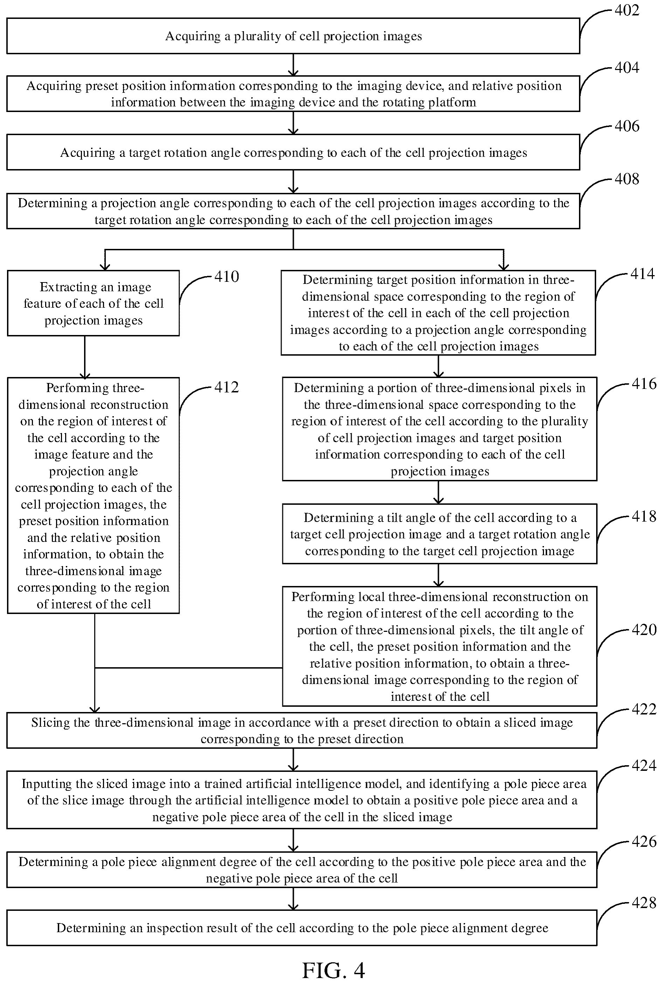

As shown in FIG. 4, FIG. 4 is a schematic flowchart of another cell inspection method provided in the embodiments of the present disclosure. The cell inspection method may be applied to the electronic device in the above embodiments. The cell inspection method may include the following steps:
Step 402: acquiring a plurality of cell projection images.

Step 404: acquiring preset position information corresponding to the imaging device, and relative position information between the imaging device and the rotating platform.

The methods of steps 402 to 404 may refer to the methods in the above embodiments, and are not repeated herein.

Step 406: acquiring a target rotation angle corresponding to each of the cell projection images.

When the rotating platform leads the cell to rotate, the position of the imaging device may remain unchanged. Since the rotation of the rotating platform leads the cell to spin, the projection angle of the imaging device relative to the cell changes. Therefore, the electronic device may acquire a target rotation angle corresponding to each of the cell projection images, and the target rotation angle is the angle by which the rotating platform rotates when the imaging device collects the cell projection images, and is within a preset rotation range. In one example, the preset rotation range may be [-θ, θ], and the rotating platform may rotate from the angle of -θ to the angle of θ, wherein θ may be less than 180 degrees, meaning the cell does not need to rotate a full circle. The rotation speed of the rotating platform may be fixed, and the imaging device may collect the cell projection images at a fixed frequency, i.e., the imaging device may collect one cell projection image every time the rotating platform rotates by a fixed angle, and collect a plurality of cell projection images during the rotation process of the rotating platform. Optionally, the electronic device may determine the target rotation angle corresponding to each of the cell projection images according to the rotation speed of the rotating platform and the fixed frequency at which the imaging device collects the cell projection images.

Step 408: determining a projection angle corresponding to each of the cell projection images according to the target rotation angle corresponding to each of the cell projection images.

The electronic device may determine the projection angle corresponding to each of the cell projection images according to the target rotation angle corresponding to each of the cell projection images. Optionally, the electronic device may determine a reference rotation angle among the plurality of target rotation angles, determine the projection angle corresponding to the cell projection image corresponding to the reference rotation angle as a reference projection angle, and then determine the angular difference between the projection angle corresponding to each of the cell projection images and the reference projection angle according to the angular difference between the target rotation angle corresponding to each of the cell projection images and the reference rotation angle, thereby obtaining the projection angle corresponding to each of the cell projection images. In one example, the reference projection angle may be the angle at which the front side of the cell is parallel to the beam output by the beam output device. As shown in FIG. 3, the reference rotation angle corresponding to the reference projection angle may be 0 degrees.

After Step 408, the electronic device may execute step 410 or step 414, which corresponds to different three-dimensional reconstruction methods respectively.

Step 410: extracting an image feature of each of the cell projection images.

The electronic device may extract an image feature of each of the cell projection images. Herein, the image feature may include, but is not limited to, edge features, corner features, texture features, feature points, etc., which is not limited in the embodiments of the present disclosure. The image feature is used for three-dimensional reconstruction to obtain the three-dimensional image. Generally, the more image features extracted, the more precise the three-dimensional image obtained, but the more time the electronic device requires for three-dimensional reconstruction.

Step 412: performing three-dimensional reconstruction on the region of interest of the cell according to the image feature and the projection angle corresponding to each of the cell projection images, the preset position information and the relative position information, to obtain the three-dimensional image corresponding to the region of interest of the cell.

Optionally, the electronic device may reconstruct the shape, size, and other information of the three-dimensional image according to the image feature and the projection angle corresponding to each of the cell projection images, and then determine the position information of the three-dimensional image in three-dimensional space according to the preset position information and the relative position information, thereby determining the three-dimensional image corresponding to the region of interest of the cell.

In the embodiments of the present disclosure, the electronic device may further acquire the target rotation angle corresponding to each of the cell projection images, wherein the target rotation angle is within the preset rotation range, and determine the projection angle corresponding to each of the cell projection images according to the target rotation angle corresponding to each of the cell projection images, i.e., the projection angle may also be within a certain range. Then, the electronic device may extract the image feature of each of the cell projection images, and perform three-dimensional reconstruction on the region of interest of the cell according to the image feature and the projection angle corresponding to each of the cell projection images, the preset position information, and the relative position information, to obtain the three-dimensional image corresponding to the region of interest of the cell. The electronic device does not require cell projection images from a full rotation around the cell, which reduces the scanning time of the imaging device for the cell, may accelerate the construction process of the three-dimensional image, and improves the efficiency of the cell inspection.

Step 414: determining target position information in three-dimensional space corresponding to the region of interest of the cell in each of the cell projection images according to a projection angle corresponding to each of the cell projection images.

The electronic device may determine target position information in three-dimensional space corresponding to the region of interest of the cell in each of the cell projection images according to a projection angle corresponding to each of the cell projection images. Optionally, the first cell projection image may be any one of the plurality of cell projection images, and the electronic device may determine image position information of the region of interest of the cell in the first cell projection image, and then determine the target position information in three-dimensional space corresponding to the region of interest of the cell in the first cell projection image according to the projection angle and the image position information corresponding to the first cell projection image.

Step 416: determining a portion of three-dimensional pixels in the three-dimensional space corresponding to the region of interest of the cell according to the plurality of cell projection images and target position information corresponding to each of the cell projection images.

The electronic device may determine a portion of three-dimensional pixels in the three-dimensional space corresponding to the region of interest of the cell according to the plurality of cell projection images and target position information corresponding to each of the cell projection images. Optionally, the electronic device may cause the overlapping positions of the region of interest of the cell under different projection angles to correspond through matching and registration algorithms, and fuse the image information of the overlapping positions in the plurality of cell projection images to determine the portion of three-dimensional pixels in the three-dimensional space corresponding to the region of interest of the cell.

Step 418: determining a tilt angle of the cell according to a target cell projection image and a target rotation angle corresponding to the target cell projection image.

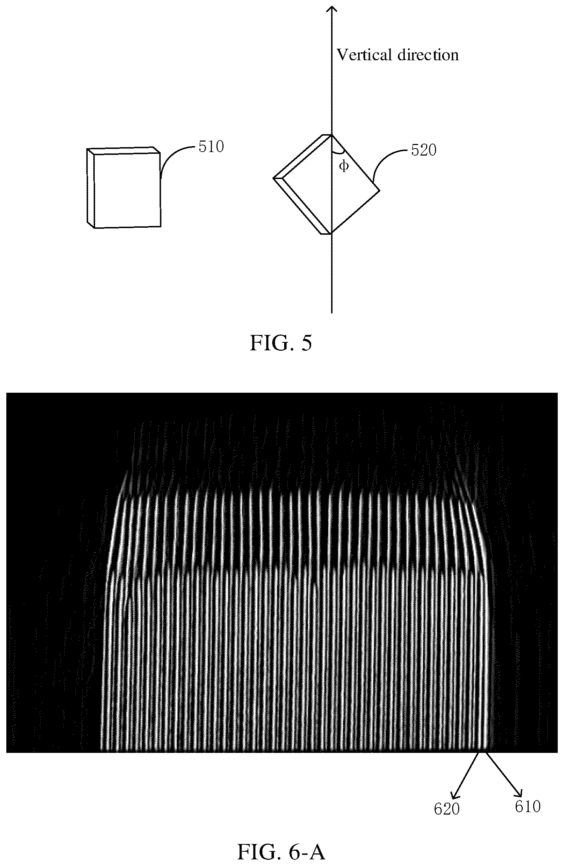

Herein, the target cell projection image is any one of the cell projection images whose corresponding target rotation angle is not a preset angle. When the rotating platform rotates to the preset angle, the front side of the cell is parallel to the beam output by the beam output device, and the beam can pass through the cell parallelly. The tilt angle of the cell cannot be projected in the cell projection image, and the electronic device cannot determine the tilt angle of the cell according to the cell projection image corresponding to the preset angle. The tilt angle represents an angle by which the cell tilts relative to a vertical direction. As shown in FIG. 5, FIG. 5 is a schematic diagram of the tilt angle of the cell provided in the embodiments of the present disclosure. The cell 510 is a vertically placed cell, and the angle by which the cell 510 tilts relative to the vertical direction is 0 degrees, so the tilt angle of the cell 510 is 0 degrees. The cell 520 is a non-vertically placed cell, and the angle by which the cell 520 tilts relative to the vertical direction is φ, so the tilt angle of the cell 520 is φ.

In one embodiment, the electronic device may identify a projection area in the target cell projection image corresponding to a cell, determine a projection tilt angle of the cell according to the projection area, and then determine the tilt angle of the cell according to the projection tilt angle and the target rotation angle corresponding to the target cell projection image.

Here, the projection area in the target cell projection image corresponding to the cell may refer to the projection image corresponding to the region of interest of the cell. The projection tilt angle of the cell represents an angle formed by the projection of the tilt angle of the cell onto the target cell projection image. The target rotation angle may be used to characterize an angle formed by the projection of the tilt angle of the cell onto a plane perpendicular to the plane to which the target cell projection image belongs. Specifically, if the preset angle is 0 degrees, i.e., when the rotating platform rotates to 0 degrees, the front side of the cell is parallel to the beam output by the beam output device. The preset rotation range of the rotating platform is [-θ, θ], and then the electronic device may calculate the absolute value of the target rotation angle, or calculate the difference between the target rotation angle and the preset angle, as another projection tilt angle corresponding to the tilt angle of the cell. The electronic device may determine the tilt angle of the cell according to the projection tilt angle and the another projection tilt angle. According to mathematical knowledge, the tilt angle of the cell can be calculated based on the angle formed by the projection of the tilt angle of the cell onto two mutually perpendicular planes.

Step 420: performing local three-dimensional reconstruction on the region of interest of the cell according to the portion of three-dimensional pixels, the tilt angle of the cell, the preset position information and the relative position information, to obtain a three-dimensional image corresponding to the region of interest of the cell.

Here, the local three-dimensional reconstruction may refer to, in three-dimensional space, reconstructing and filling unknown parts around known three-dimensional pixels or regions through calculation and reasoning based on the known three-dimensional pixels or regions, to obtain a complete three-dimensional image. Optionally, the portion of three-dimensional pixels may serve as the known three-dimensional pixels. The electronic device may reconstruct and fill parts of the region of interest of the cell other than the portion of three-dimensional pixels based on the tilt angle of the cell, the preset position information, and the relative position information, to obtain the three-dimensional image corresponding to the region of interest of the cell.

In one embodiment, the electronic device may perform local three-dimensional reconstruction on the region of interest of the cell corresponding to each cell projection region through an image processor based on the tilt angle of the cell, the preset position information, and the relative position information, to obtain the three-dimensional image corresponding to the region of interest of the cell. By implementing the present embodiment, compared to a central processing unit, the general-purpose computing of the image processor is more suitable for performing local three-dimensional reconstruction, which can improve the speed of three-dimensional reconstruction, thereby improving the efficiency of the cell inspection.

In the embodiments of the present disclosure, compared to the three-dimensional reconstruction method in steps 410 to 412, the local three-dimensional reconstruction method in steps 414 to 420 can further accelerate the speed at which the electronic device calculates the three-dimensional image corresponding to the region of interest of the cell, thereby ensuring that the speed of the cell inspection meets the inspection speed requirements of industrial production lines, and thus guaranteeing the safety of each cell produced industrially.

Step 422: slicing the three-dimensional image in accordance with a preset direction to obtain a sliced image corresponding to the preset direction.

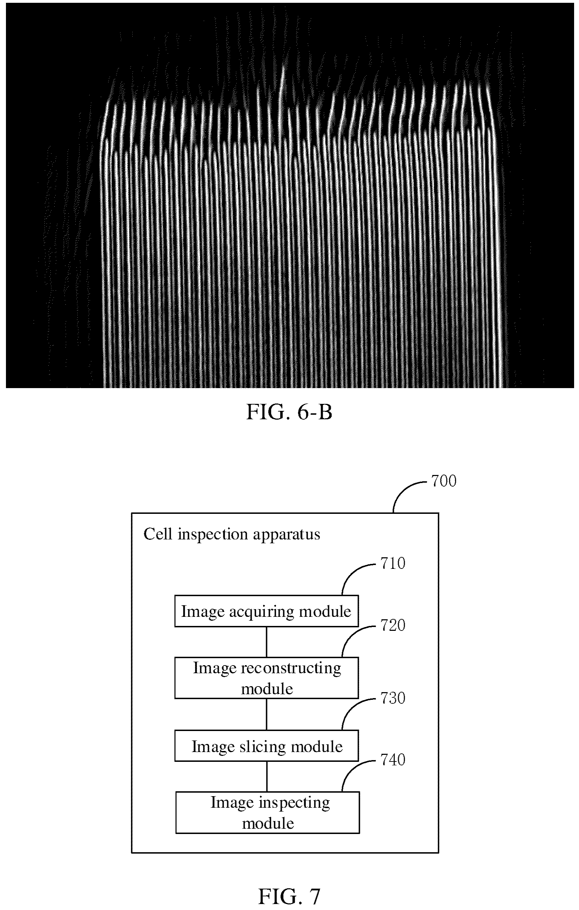

In one embodiment, the preset direction includes a first preset direction and a second preset direction. The first preset direction corresponds to the length direction of the cell, and the second preset direction corresponds to the width direction of the cell. The electronic device may slice the three-dimensional image in accordance with the first preset direction to obtain a first sliced image corresponding to the first preset direction, and slice the three-dimensional image in accordance with the second preset direction to obtain a second sliced image corresponding to the second preset direction. As shown in FIG. 6-A, FIG. 6-A is a schematic diagram of a first sliced image provided in the embodiment of the present disclosure. The white area may represent the pole piece of the cell. As shown in FIG. 6-B, FIG. 6-B is a schematic diagram of a second sliced image provided in the embodiment of the present disclosure.

Step 424: inputting the sliced image into a trained artificial intelligence model, and identifying a pole piece area of the slice image through the artificial intelligence model to obtain a positive pole piece area and a negative pole piece area of the cell in the sliced image.

Herein, the artificial intelligence model is obtained through training according to a sample image set comprising a plurality of sample images, each being divided to include a positive pole piece area and a negative pole piece area defined therein. Herein, when there is a plurality of sliced images, the electronic device may input each sliced image into the trained artificial intelligence model, and identify the pole piece area of each sliced image through the artificial intelligence model, so as to obtain the positive pole piece area and the negative pole piece area of the cell in each sliced image.

Optionally, the sliced image may include the first sliced image and the second sliced image. The electronic device may input the first sliced image into the trained artificial intelligence model, and identify the pole piece area of the first sliced image through the artificial intelligence model, so as to obtain the positive pole piece area and the negative pole piece area of the cell in the first sliced image. As shown in FIG. 6-A, the longer white strip area in the white area may represent the negative pole piece area 610, and the shorter white strip area in the white area may represent the positive pole piece area 620. The electronic device may also input the second sliced image into the trained artificial intelligence model, and identify the pole piece area of the second sliced image through the artificial intelligence model, so as to obtain the positive pole piece area and the negative pole piece area of the cell in the second sliced image.

Step 426: determining a pole piece alignment degree of the cell according to the positive pole piece area and the negative pole piece area of the cell.

Optionally, the electronic device may determine the length of the positive pole piece area and the length of the negative pole piece area of the cell, and by subtracting the length of the positive pole piece area from the length of the negative pole piece area, may obtain the pole piece alignment degree of the cell. As shown in FIG. 6-A again, the first sliced image includes a plurality of positive pole piece areas and a plurality of negative pole piece areas. Taking one negative pole piece area 610 and one positive pole piece area 620 as an example, the electronic device may determine the length of the negative pole piece area 610 and the length of the positive pole piece area 620, and by subtracting the length of the positive pole piece area 620 from the length of the negative pole piece area 610, may obtain the first pole piece alignment degree of the cell. Optionally, the electronic device may also calculate a first average value of the lengths of the plurality of negative pole piece areas in the first sliced image and a second average value of the lengths of the plurality of positive pole piece areas in the first sliced image, and by subtracting the second average value from the first average value, may obtain the first pole piece alignment degree of the cell. The calculation method of the second pole piece alignment degree shown in FIG. 6-B is the same as that of the first pole piece alignment degree, which will not repeated herein.

In one embodiment, the sliced image may include the first sliced image and the second sliced image. The first pole piece alignment degree of the cell is determined according to the positive pole piece area and the negative pole piece area of the cell in the first sliced image. The first pole piece alignment degree includes the portion of the negative pole piece that extends beyond the positive pole piece in the length direction. The electronic device also determines the second pole piece alignment degree of the cell according to the positive pole piece area and the negative pole piece area of the cell in the second sliced image, the second pole piece alignment degree includes the portion of the negative pole piece that extends beyond the positive pole piece in the width direction, and the first pole piece alignment degree and the second pole piece alignment degree may together constitute the pole piece alignment degree of the cell.

Step 428: determining an inspection result of the cell according to the pole piece alignment degree.

Optionally, the electronic device may judge whether the pole piece alignment degree is within a preset alignment degree range. If the pole piece alignment degree is within the preset alignment degree range, the inspection result of the cell is determined to be qualified. If the pole piece alignment degree is not within the preset alignment degree range, the inspection result of the cell is determined to be unqualified.

When the pole piece alignment degree includes the first pole piece alignment degree and the second pole piece alignment degree, the electronic device may judge whether the first pole piece alignment degree is within a preset first alignment degree range and whether the second pole piece alignment degree is within a preset second alignment degree range. If the first pole piece alignment degree is within the preset first alignment degree range and the second pole piece alignment degree is within the preset second alignment degree range, the inspection result of the cell is determined to be qualified. If the first pole piece alignment degree is not within the preset first alignment degree range or the second pole piece alignment degree is not within the preset second alignment degree range, the inspection result of the cell is determined to be unqualified.

In the embodiments of the present disclosure, by determining the first sliced image in the length direction of the cell and determining the first pole piece alignment degree according to the first sliced image, as well as determining the second sliced image in the width direction of the cell and determining the second pole piece alignment degree according to the second sliced image, it is possible to separately judge whether the pole piece alignment degree of the cell in the length direction and the width direction meets preset requirements, thereby improving the accuracy of the cell inspection.

As shown in FIG. 7, FIG. 7 is a modular schematic diagram of a cell inspection apparatus provided in the embodiment of the present disclosure. The cell inspection apparatus 700 may include an image acquiring module 710, an image reconstructing module 720, an image slicing module 730, and an image inspecting module 740, wherein:
the image acquiring module 710 is configured for acquiring a plurality of cell projection images corresponding to a plurality of projection angles of a cell and comprising a region of interest of the cell;
the image reconstructing module 720 is configured for performing three-dimensional reconstruction on the region of interest of the cell according to the plurality of cell projection images and a projection angle corresponding to each of the cell projection images, to obtain a three-dimensional image corresponding to the region of interest of the cell;
the image slicing module 730 is configured for slicing the three-dimensional image in accordance with a preset direction to obtain a sliced image corresponding to the preset direction; and

The image inspecting module 740 is configured for determining an inspection result of the cell according to the sliced image.

In one embodiment, the image reconstructing module 720 is further configured for performing filtering processing on the plurality of cell projection images to obtain filtered images corresponding to the plurality of cell projection images respectively; and performing three-dimensional reconstruction on the region of interest of the cell according to the filtered images corresponding to the plurality of cell projection images respectively, to obtain the three-dimensional image corresponding to the region of interest of the cell.

In one embodiment, the cell is placed on a rotating platform with an imaging device arranged around the rotating platform, and the imaging device is configured for collecting the plurality of cell projection images; the image reconstructing module 720 is further configured for acquiring preset position information corresponding to the imaging device, and relative position information between the imaging device and the rotating platform; and performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell.

In one embodiment, the image reconstructing module 720 is further configured for extracting an image feature of each of the cell projection images; and performing three-dimensional reconstruction on the region of interest of the cell according to the image feature and the projection angle corresponding to each of the cell projection images, the preset position information and the relative position information, to obtain the three-dimensional image corresponding to the region of interest of the cell.

In one embodiment, the rotating platform drives the cell to rotate; the cell inspection apparatus 700 further comprises an angle determining module configured for acquiring a target rotation angle corresponding to each of the cell projection images, the target rotation angle representing an angle by which the rotating platform rotates when the imaging device collects the cell projection images; wherein the target rotation angle is within a preset rotation range; and determining a projection angle corresponding to each of the cell projection images according to a target rotation angle corresponding to each of the cell projection images.

In one embodiment, the image reconstructing module 720 is further configured for determining target position information in three-dimensional space corresponding to the region of interest of the cell in each of the cell projection images according to a projection angle corresponding to each of the cell projection images; determining a portion of three-dimensional pixels in the three-dimensional space corresponding to the region of interest of the cell according to the plurality of cell projection images and target position information corresponding to each of the cell projection images; determining a tilt angle of the cell according to a target cell projection image and a target rotation angle corresponding to the target cell projection image; wherein the tilt angle represents an angle by which the cell tilts relative to a vertical direction, and the target cell projection image is any cell projection image whose corresponding target rotation angle is not a preset angle; and performing local three-dimensional reconstruction on the region of interest of the cell according to the portion of three-dimensional pixels, the tilt angle of the cell, the preset position information and the relative position information, to obtain a three-dimensional image corresponding to the region of interest of the cell.

In one embodiment, the image reconstructing module 720 is further configured for identifying a projection area in the target cell projection image corresponding to a cell, and determining a projection tilt angle of the cell according to the projection area, the projection tilt angle of the cell representing an angle formed by projection of the tilt angle of the cell onto the target cell projection image; and determining the tilt angle of the cell according to the projection tilt angle and the target rotation angle corresponding to the target cell projection image.

In one embodiment, the image inspecting module 740 is further configured for inputting the sliced image into a trained artificial intelligence model, and identifying a pole piece area of the slice image through the artificial intelligence model to obtain a positive pole piece area and a negative pole piece area of the cell in the sliced image, the artificial intelligence model being obtained through training according to a sample image set including a plurality of sample images, each being divided to include a positive pole piece area and a negative pole piece area defined therein; determining a pole piece alignment degree of the cell according to the positive pole piece area and the negative pole piece area of the cell; and determining an inspection result of the cell according to the pole piece alignment degree.

In one embodiment, the preset direction comprises a first preset direction and a second preset direction, the first preset direction corresponds to a length direction of the cell, and the second preset direction corresponds to a width direction of the cell; the image slicing module 730 is further configured for slicing the three-dimensional image in accordance with the first preset direction to obtain a first sliced image corresponding to the first preset direction; slicing the three-dimensional image in accordance with the second preset direction to obtain a second sliced image corresponding to the second preset direction; the image inspecting module 740 is further configured for determining a first pole piece alignment degree of the cell according to the positive pole piece area and the negative pole piece area of the cell in the first sliced image, the first pole piece alignment degree including a portion of a negative pole piece that extends beyond a positive pole piece in the length direction; and determining a second pole piece alignment degree of the cell according to the positive pole piece area and the negative pole piece area of the cell in the second sliced image, the second pole piece alignment degree including a portion of the negative pole piece that extends beyond the positive pole piece in the width direction.

In the embodiments of the present disclosure, the electronic device can acquire a plurality of cell projection images, which correspond to a plurality of collection angles of the cell and include a region of interest of the cell. According to the plurality of cell projection images, the electronic device can perform three-dimensional reconstruction on the cell projection area to obtain a three-dimensional image corresponding to the region of interest of the cell, can also slice the three-dimensional image in accordance with a preset direction to obtain a sliced image corresponding to the preset direction, and then can determine the inspection result of the cell according to the sliced image. After performing three-dimensional reconstruction on the region of interest of the cell using the plurality of cell projection images, the obtained three-dimensional image provides more accurate and comprehensive cell information compared to the two-dimensional images obtained through projection, and then by slicing the three-dimensional image according to the preset direction, it is also possible to make the sliced image more precise than the two-dimensional images obtained through projection, such that the accuracy of cell inspection is improved without reconstructing the entire cell, but only the region of interest of the cell is reconstructed, which reduces the time required for three-dimensional reconstruction and improves the efficiency of cell inspection.

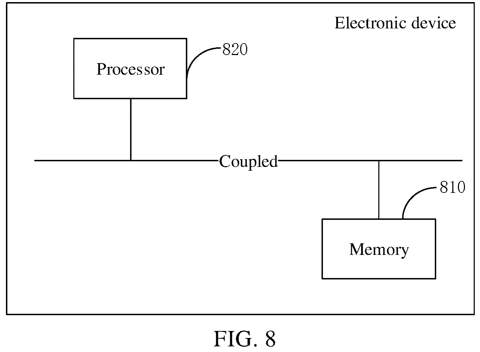

As shown in FIG. 8, in one embodiment, an electronic device is provided, which may include:
a memory 810 storing executable program code;
a processor 820 coupled to the memory;
the processor 820 invokes the executable program code stored in the memory 810, so as to implement the cell inspection method provided by each of the above embodiments.

The memory 810 may include Random Access Memory (RAM) and may also include Read-Only Memory (ROM). The memory 810 may be used to store instructions, programs, codes, code sets, or instruction sets. The memory 810 may include a program storage area and a data storage area, wherein the program storage area may store instructions for implementing the operating system, instructions for implementing at least one function (such as touch function, sound playback function, image playback function, etc.), and instructions for implementing the above methods embodiments. The data storage area may also store data created by the electronic device during use.

The processor 820 may include one or more processing cores. The processor 820 connects various parts of the entire electronic device through various interfaces and lines. By running or executing the instructions, programs, code sets, or instruction sets stored in the memory 810, and calling the data stored in the memory 810, the processor 820 performs various functions of the electronic device and processes data. Optionally, the processor 820 may be implemented in the form of at least one of Digital Signal Processing (DSP), Field-Programmable Gate Array (FPGA), and Programmable Logic Array (PLA). The processor 820 may integrate one or several combinations of a Central Processing Unit (CPU), a Graphics Processing Unit (GPU), and a modem. Here, the CPU mainly handles the operating system, user interface, applications, etc.; the GPU is responsible for rendering and drawing display content; the modem handles wireless communication. It can be understood that the above modem may also not be integrated into the processor 820 and can be realized through a separate communication chip.

It can be understood that the electronic device may include more or fewer structural elements than those shown in the block diagram, for example, including a power module, physical buttons, a WiFi (Wireless Fidelity) module, a speaker, a Bluetooth module, sensors, etc., which are not limited herein.

The embodiments of the present disclosure also discloses a computer-readable storage medium that stores a computer program, wherein the computer program causes the computer to execute the methods described in the above embodiments.

In addition, the embodiments of the present disclosure further discloses a computer program product, which, when run on a computer, causes the computer to perform all or part of the steps of any of the cell inspection methods described in the above embodiments.

Those of ordinary skill in the art can understand that all or part of the steps in the various methods of the above embodiment may be completed by instructing the relevant hardware through the program, and the program can be stored in a computer-readable storage medium. The storage medium includes Read-Only Memory (ROM), Random Access Memory (RAM), Programmable Read-only Memory (PROM), Erasable Programmable Read Only Memory (EPROM), One-time Programmable Read-Only Memory (OTPROM), Electrically-Erasable Programmable Read-Only Memory (EEPROM), Compact Disc Read-Only Memory (CD-ROM), or other optical disk storage, disk storage, tape storage, or any other computer-readable medium capable of carrying or storing data.

The present disclosure has been introduced in detail to a cell inspection method and apparatus, electronic device, and storage medium according to the embodiments of the present disclosure. The principles and implementation methods of the present disclosure have been described in detail with specific examples in this article. The descriptions of the above embodiments are only used to help understand the methods and core ideas of the present disclosure. At the same time, for those of ordinary skill in the art, based on the ideas of the present disclosure, there may be variations in the specific implementation methods and application scopes. Therefore, the content of the present specification should not be understood as a limiting the scope of the present disclosure.

## Claims

1. A cell inspection method, **characterized by** comprising:
acquiring a plurality of cell projection images corresponding to a plurality of projection angles of a cell and comprising a region of interest of the cell;
performing three-dimensional reconstruction on the region of interest of the cell according to the plurality of cell projection images and a projection angle corresponding to each of the cell projection images, to obtain a three-dimensional image corresponding to the region of interest of the cell;
slicing the three-dimensional image in accordance with a preset direction to obtain a sliced image corresponding to the preset direction; and
determining an inspection result of the cell according to the sliced image.

2. The method according to claim 1, **characterized in that** the "performing three-dimensional reconstruction on the region of interest of the cell according to the plurality of cell projection images, to obtain a three-dimensional image corresponding to the region of interest of the cell" comprises:
performing filtering processing on the plurality of cell projection images to obtain filtered images corresponding to the plurality of cell projection images respectively; and
performing three-dimensional reconstruction on the region of interest of the cell according to the filtered images corresponding to the plurality of cell projection images respectively, to obtain the three-dimensional image corresponding to the region of interest of the cell.

3. The method according to any one of claims 1 to 2, **characterized in that** the cell is placed on a rotating platform with an imaging device arranged around the rotating platform, and the imaging device is configured for collecting the plurality of cell projection images; the "performing three-dimensional reconstruction on the region of interest of the cell according to the plurality of cell projection images and a projection angle corresponding to each of the cell projection images, to obtain a three-dimensional image corresponding to the region of interest of the cell" comprises:
acquiring preset position information corresponding to the imaging device, and relative position information between the imaging device and the rotating platform; and
performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell.

4. The method according to claim 3, **characterized in that** the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell" comprises:
extracting an image feature of each of the cell projection images; and
performing three-dimensional reconstruction on the region of interest of the cell according to the image feature and the projection angle corresponding to each of the cell projection images, the preset position information and the relative position information, to obtain the three-dimensional image corresponding to the region of interest of the cell.

5. The method according to claim 3, **characterized in that** the rotating platform drives the cell to rotate; before the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell", the method further comprises:
acquiring a target rotation angle corresponding to each of the cell projection images, the target rotation angle representing an angle by which the rotating platform rotates when the imaging device collects the cell projection images; wherein the target rotation angle is within a preset rotation range; and
determining a projection angle corresponding to each of the cell projection images according to a target rotation angle corresponding to each of the cell projection images.

6. The method according to claim 3, **characterized in that** the "performing three-dimensional reconstruction on the region of interest of the cell according to the plurality of cell projection images, the projection angle corresponding to each of the cell projection images, the preset position information and the relative position information, to obtain the three-dimensional image corresponding to the region of interest of the cell" comprises:
determining target position information in three-dimensional space corresponding to the region of interest of the cell in each of the cell projection images according to a projection angle corresponding to each of the cell projection images;
determining a portion of three-dimensional pixels in the three-dimensional space corresponding to the region of interest of the cell according to the plurality of cell projection images and target position information corresponding to each of the cell projection images;
determining a tilt angle of the cell according to a target cell projection image and a target rotation angle corresponding to the target cell projection image; wherein the tilt angle represents an angle by which the cell tilts relative to a vertical direction, and the target cell projection image is any cell projection image whose corresponding target rotation angle is not a preset angle; and
performing local three-dimensional reconstruction on the region of interest of the cell according to the portion of three-dimensional pixels, the tilt angle of the cell, the preset position information and the relative position information, to obtain a three-dimensional image corresponding to the region of interest of the cell.

7. The method according to claim 6, **characterized in that** the "determining a tilt angle of the cell according to a target cell projection image and a target rotation angle corresponding to the target cell projection image" comprises:
identifying a projection area in the target cell projection image corresponding to a cell, and determining a projection tilt angle of the cell according to the projection area, the projection tilt angle of the cell representing an angle formed by projection of the tilt angle of the cell onto the target cell projection image; and
determining the tilt angle of the cell according to the projection tilt angle and the target rotation angle corresponding to the target cell projection image.

8. The method according to any one of claims 1 to 2 and 4 to 7, **characterized in that** the "determining an inspection result of the cell according to the sliced image" comprises:
inputting the sliced image into a trained artificial intelligence model, and identifying a pole piece area of the slice image through the artificial intelligence model to obtain a positive pole piece area and a negative pole piece area of the cell in the sliced image, the artificial intelligence model being obtained through training according to a sample image set comprising a plurality of sample images, each being divided to include a positive pole piece area and a negative pole piece area defined therein;
determining a pole piece alignment degree of the cell according to the positive pole piece area and the negative pole piece area of the cell; and
determining an inspection result of the cell according to the pole piece alignment degree.

9. The method according to claim 8, **characterized in that** the preset direction comprises a first preset direction and a second preset direction, the first preset direction corresponds to a length direction of the cell, and the second preset direction corresponds to a width direction of the cell; the "slicing the three-dimensional image in accordance with a preset direction to obtain a sliced image corresponding to the preset direction" comprises:
slicing the three-dimensional image in accordance with the first preset direction to obtain a first sliced image corresponding to the first preset direction;
slicing the three-dimensional image in accordance with the second preset direction to obtain a second sliced image corresponding to the second preset direction;
the "determining a pole piece alignment degree of the cell according to the positive pole piece area and the negative pole piece area of the cell" comprises:
determining a first pole piece alignment degree of the cell according to the positive pole piece area and the negative pole piece area of the cell in the first sliced image, the first pole piece alignment degree comprising a portion of a negative pole piece that extends beyond a positive pole piece in the length direction; and
determining a second pole piece alignment degree of the cell according to the positive pole piece area and the negative pole piece area of the cell in the second sliced image, the second pole piece alignment degree comprising a portion of the negative pole piece that extends beyond the positive pole piece in the width direction.

10. A cell inspection apparatus, **characterized by** comprising:
an image acquiring module configured for acquiring a plurality of cell projection images corresponding to a plurality of projection angles of a cell and comprising a region of interest of the cell;
an image reconstructing module configured for performing three-dimensional reconstruction on the region of interest of the cell according to the plurality of cell projection images and a projection angle corresponding to each of the cell projection images, to obtain a three-dimensional image corresponding to the region of interest of the cell;
an image slicing module configured for slicing the three-dimensional image in accordance with a preset direction to obtain a sliced image corresponding to the preset direction; and
an image inspecting module configured for determining an inspection result of the cell according to the sliced image.

11. An electronic device, **characterized by** comprising:
a memory storing executable program codes;
a processor coupled to the memory;
the processor calls the executable program codes stored in the memory to execute the method according to any one of claims 1 to 9.

12. A computer-readable storage medium, **characterized in that** the computer-readable storage medium stores a computer program, wherein the computer program, when executed by a processor, causes the processor to execute the method according to any one of claims 1 to 9.
